# EUROPEAN PATENT SPECIFICATION

(11) **EP 0 781 782 B1**
(45) Date of publication and mention of the grant of the patent: **04.08.1999**
(21) Application number: 96203599.4
(22) Date of filing: 18.12.1996
(51) Int. Cl.: C08C 2/04, C08F 6/08

(54) **Removal of alkali metal compounds from polymer cements**
Entfernung von Alkalimetallverbindungen aus Polymer in Lösung
Elimination des composés de métaux alcalins des ciments polymériques

(30) Priority: 28.12.1995 US 9523
(43) Date of publication of application: 02.07.1997
(73) Proprietor: SHELL INTERNATIONALE RESEARCH MAATSCHAPPIJ B.V., 2596 HR Den Haag (NL)
(72) Inventor: Diaz, Zaida, Houston, Texas 77077 (US); Wilkey, John David, Houston, Texas 77068 (US)

(56) References cited:
- DE-B- 1 087 808
- US-A- 3 050 569
- US-A- 3 410 838
- US-A- 5 177 297
- US-A- 5 338 824

## Description

The present invention relates to a process for removing alkali metal compounds from a polymer solution resulting from a polymerisation reaction (i.e. a polymer cement). More specifically, the present invention relates to a process for removing alkali metal compounds from a low-viscosity functionalised polymer cement.

In US patent 3,050,569 and German patent 1,087,808 processes are disclosed for removing alkali metal compounds from a polymer cement wherein use is made of an absorbent containing 1 to 25% of water.

In US Patent 5,220,100 a process is disclosed for separating certain alkali metal compounds from a polymer cement comprising a conjugated diolefin and/or an alkenyl aromatic hydrocarbon monomer. In said process use is made of an adsorbent, in which 10 to 100% of the pore volume is occupied by water.

As a result of extensive research and experimentation it has now been found that the key to effective removal of lithium compounds from polymer cements by adsorbents such as cation exchange resins, clays, zeolites and alumina is the molar ratio of water to lithium. It has further been found that polymer cements which are relatively free of alkali metal salt can be prepared when the ratio is increased by using a wet adsorbent, i.e. an adsorbent containing a large amount of water.

Accordingly, the present invention relates to a process for removing alkali metal compounds from a polymer cement comprising contacting the polymer cement with an adsorbent having a high surface area with a particle size within the range of from 0.15 to 12 mm and a pore size within the range of from 0.4 to 10,000 nm in combination with water, whereby the volume of water is greater than the pore volume of the adsorbent. Preferably, the volume of water amounts to twice the pore volume of the adsorbent.

It has also been found that wet cation exchange resins and clay can be used as adsorbent for removal of alkali metal compounds, especially lithium compounds, from polymer cements, especially low-viscosity functionalised polymer cements.

The present invention provides a process for removing alkali metal compounds, especially lithium compounds, from a polymer cement, especially a low-viscosity functionalised polymer cement. It will be understood that a polymer cement comprises polymer formed, organic solvent, non-converted monomer and polymerisation initiator. The process requires the use of an adsorbent or mixture of adsorbents to remove the alkali metal compounds from the polymer cement. These adsorbents can be separated from the polymer cement using techniques known to the art, or separation can be avoided altogether by passing the alkali metal compound containing polymer cement over a solid adsorbent bed.

Adsorbents useful in the invention include clays, alumina, silica-alumina and silica. Such solid adsorbents have a high surface area with a particle size within the range of from 0.15 to 12 mm and a pore size within in the range from 0.4 to 10,000 nm (4 to 100,000 Å). A particularly effective clay is wet attapulgite. As mentioned before, wet cation exchange resins can also suitably be used in accordance with the invention and include AMBERLYST 15 (a trademark of Rohm and Haas for a strong acid resin, H+ form).

During the removal of the lithium or other alkali metal compounds, the polymer may suitably be present in a solvent at a concentration within the range of from 2 to 80 weight percent, based on total polymer solution, and the alkali metal compound, such as lithium, may be present at a concentration within the range from 0.005 to 5 wt% based on the polymer. Contact between the polymer cement and the adsorbent preferably occurs at a temperature within the range of 5 to 100°C, at a pressure up to 41 atm and at a nominal holding time within the range of 10 to 100 minutes. Where suitable, where the polymer is liquid, has low viscosity, and low molecular weight, the polymer may be used without a solvent.

Low viscosity functionalised polymer can be made by anionic polymerisation of conjugated diene hydrocarbons with lithium initiators as is well known (see for instance U.S. Patents Nos. 4,039,503 and Re. 27,145. Polymerisation commences with a monolithium, dilithium, or polylithium initiator which builds a living polymer backbone at each lithium site. Typical living polymer structures containing polymerised conjugated diene hydrocarbons are:
X-B-Li
X-A-B-Li
X-A-B-A-Li
Li-B-Y-B-Li
Li-A-B-Y-B-A-Li
wherein B represents polymerised units of one or more conjugated diene hydrocarbons such as butadiene or isoprene. A represents polymerised units of one or more vinyl aromatic hydrocarbon compounds such as styrene. X is the residue of a monolithium initiator such as sec-butyllithium, and Y is the residue of a dilithium initiator such as the diadduct of sec-butyllithium and m-diisopropenylbenzene. Some structures, including those pertaining to polylithium initiators or random units of styrene and a conjugated diene, generally have limited practical utility although known in the art.

The anionic polymerisation of the conjugated diene hydrocarbons is typically controlled with structure modifiers such as diethylether or glyme (1,2-diethoxy-ethane) to obtain the desired amount of 1,4-addition. As described in Re 27,145. The level of 1,2-addition of a butadiene polymer or copolymer can greatly affect elastomeric properties after hydrogenation.

Dilithium initiation with the diadduct of sec-butyllithium (s-BuLi)and m-diisopropenylbenzene also requires presence of a non-reactive coordinating agent such as diethyl ether, glyme, or triethyl amine, otherwise monolithium initiation is achieved. Ether is typically present during anionic polymerisation as discussed above, and the amount of ether typically needed to obtain typical polymeric structures is sufficient to provide dilithium initiation.

Anionic polymerisation is often terminated by addition of water to remove the lithium as lithium hydroxide (LiOH) or by addition of an alcohol (ROH) to remove the lithium as a lithium alkoxide (LiOR). For polymers having terminal functional groups, the living polymer chains are preferably terminated with hydroxyl, carboxyl, phenol, epoxy or amine groups by reaction with ethylene oxide, carbon dioxide, a protected hydroxystyrene monomer, ethylene oxide plus epichlorohydrin, or the amine compounds listed in U.S. Patent 4,791,174, respectively.

The termination of living anionic polymers to form functional end groups is described in U.S. Patents 4,417,029, 4,518,753 and 4,753,991. Of particular interest for the present invention are terminal hydroxyl, carboxyl, phenol, epoxy and amine groups. Such polymers with number average molecular weights between about 1000 and 20,000 as measured by gel permeation chromatography (GPC), are low viscosity functionalised polymers.

Hydrogenation of at least 90%, preferably at least 95%, of the unsaturation in low molecular weight butadiene polymers is achieved with nickel catalysts as described in U,S. Patents Re. 27,145 and 4,970,254. The preferred nickel catalyst is a mixture of nickel 2-ethylhexanoate and triethylaluminium. Such polymers with number average molecular weights between 1000 and 20,000 as measured by gel permeation chromatography are low viscosity functionalised polymers.

If too much catalyst residue remains in the polymer after polymerisation and reaction to produce the hydroxy-terminated polymer, the hydrogenation step may be adversely affected because alkali metal alkoxides, specifically lithium methoxide, may deactivate the hydrogenation catalyst. Obviously then, it is highly advantageous to remove as much of the alkali compound from the polymer as possible prior to hydrogenation.

Polymer solvents include but are not limited to hydrocarbons such as paraffins, cycloparaffins, alkyl substituted cycloparaffins, aromatics and alkyl substituted aromatics, such as benzene, toluene, cyclohexane, methyl cyclohexane, n-butane, n-hexane, and n-heptane. Ethers, such as diethyl ether, and tetrahydrofuran can be used. Mixtures of the foregoing can be removed and another solvent substituted.

The alkali metal compound will be removed by contacting the polymer solution with a suitable solid adsorbent at a concentration within the range from 1 to 50 weight percent, based on the polymer. Higher solid adsorbent concentrations will be most effective. The alkali metal compounds may be in solution or suspended prior to and at least initially during the removing process.

The polymer cement may be passed over a bed of solid adsorbent or the solid adsorbent may be combined with physical separation, e.g. filtration, centrifugation, settling and decantation.

Any alkali metal compound commonly found in a polymer solution when an alkali metal compound is used as the catalyst or initiator can be removed from the polymer. These include alkali metal hydrides, alkali metal alkoxides and alkali metal hydroxides.

The invention will now be illustrated by means of the following Examples.

### EXAMPLES

Conventional shake tests were carried out to determine the removal of lithium by four wet adsorbents: attapulgite gel B, ultrastable Y zeolite in the hydrogen form (H-USY), alumina DD-420 (a wide pore alumina from Discovery Chemical), and Amberlyst 15 (a strong cation exchange resin from Rohm and Haas). The lithium salts were formed in diol cements by termination with n-butanol, 2-ethylhexanol, or water. The lithium content of the cements was 1423 ppm for the cement terminated with n-butanol, 1343 ppm for the cement terminated with 2-ethylhexanol, and 572 ppm for the cement terminated with water.

In the shake tests, the adsorbents were contacted with the polymer cements by shaking the mixtures gently in glass bottles at 23C for 16 to 20 hours. The cement to adsorbent weight ratios used in these tests ranged from 10 to 500. After the contacting period, samples of the cements were decanted off and analysed by ion chromatography to determine lithium concentrations. The lithium reduction effected by the adsorbents, and the lithium loading on the adsorbents, were calculated from these data. It is clear from comparisons that the wet adsorbents in accordance with the present invention achieve higher lithium loadings and hence reduce the lithium concentration in the polymer cements to lower levels than the dry adsorbents.

## Claims

1. A process for removing alkali metal compounds from a polymer cement comprising contacting the polymer cement with an adsorbent having a high surface area with a particle size within the range of from 0.15 to 12 mm and a pore size within the range of from 0.4 to 10,000 nm in combination with water, whereby the volume of water is greater than the pore volume of the adsorbent.

2. A process according to claim 1 wherein the alkali metal is lithium.

3. A process according to claim 1 or 2 wherein the polymer cement is a low-viscosity functionalised polymer cement.

4. A process according to any one of claims 1 to 3 wherein the volume of water amounts to twice the pore volume of the adsorbent.

5. A process according to any one of claims 1 to 4 wherein the adsorbent comprises an ion exchange resin.

6. A process according to any one of claims 1 to 4 wherein the adsorbent comprises a clay.

7. A process according to claim 6 wherein the clay comprises attapulgite.

## Patentansprüche

1. Verfahren zur Abtrennung von Alkalimetallverbindungen aus einem Polymerzement, umfassend ein Inkontaktbringen des Polymerzements mit einem Adsorptionsmittel, das eine hohe Oberfläche, eine Teilchengröße im Bereich von 0,15 bis 12 mm und eine Porengröße im Bereich von 0,4 bis 10.000 nm aufweist, in Kombination mit Wasser, wobei das Volumen des Wassers größer ist als das Porenvolumen des Adsorptionsmittels.

2. Verfahren nach Anspruch 1, worin das Alkalimetall Lithium ist.

3. Verfahren nach Anspruch 1 oder 2, worin der Polymerzement ein niedrigviskoser, funktionalisierter Polymerzement ist.

4. Verfahren nach einem der Ansprüche 1 bis 3, worin das Volumen des Wassers das Doppelte des Porenvolumens des Adsorptionsmittels beträgt.

5. Verfahren nach einem der Ansprüche 1 bis 4, worin das Adsorptionsmittel ein Ionenaustauschharz umfaßt.

6. Verfahren nach einem der Ansprüche 1 bis 4, worin das Adsorptionsmittel einen Ton umfaßt.

7. Verfahren nach Anspruch 6, worin der Ton Attapulgit umfaßt.

## Revendications

1. Procédé de séparation de composés de métal alcalin d'un ciment de polymère comprenant la mise en contact du ciment de polymère avec un adsorbant ayant une aire superficielle élevée avec une taille de particule dans la gamme de 0,15 à 12 mm et une taille de pore dans la gamme de 0,4 à 10.000 nm en combinaison avec de l'eau, de sorte que le volume d'eau est supérieur au volume des pores de l'adsorbant.

2. Procédé suivant la revendication 1, dans lequel le métal alcalin est le lithium.

3. Procédé suivant l'une ou l'autre des revendications 1 et 2, dans lequel le ciment de polymère est un ciment de polymère fonctionnalisé de faible viscosité.

4. Procédé suivant l'une quelconque des revendications 1 à 3, dans lequel le volume d'eau s'élève à deux fois le volume des pores de l'adsorbant.

5. Procédé suivant l'une quelconque des revendications 1 à 4, dans lequel l'adsorbant comprend une résine échangeuse d'ions.

6. Procédé suivant l'une quelconque des revendications 1 à 4, dans lequel l'adsorbant comprend une argile.

7. Procédé suivant la revendication 6, dans lequel l'argile comprend de l'attapulgite.
